# EUROPÄISCHE PATENTANMELDUNG

(11) **EP 2 980 630 A1**
(43) Veröffentlichungstag der Anmeldung: **03.02.2016**
(21) Anmeldenummer: 15179016.9
(22) Anmeldetag: 30.07.2015
(51) Int. Cl.: G02C 5/00, G02C 5/08

(54) **FALTBRILLE**

(30) Priorität: 31.07.2014 CH 11722014
(71) Anmelder: Maii IP BV, 1031 HV Amsterdam (NL)
(72) Erfinder: Klant, Keesjan, 2136BC Zwaanshoek (NL)
(74) Vertreter: Riederer Hasler & Partner Patentanwälte AG

(57) **Zusammenfassung**

Die Erfindung betrifft eine Faltbrille (11) mit einer ersten Faltmechanik (19) zwischen zwei Brillengläsern (13), einer zweiten Faltmechanik (21) jeweils zwischen einem der beiden Brillengläsern (13) und einem linken und rechten Brillenbügel (17) wodurch die Faltbrille (11) M-förmig zusammenfaltbar ist und einer dritten Faltmechanik (23) zwischen dem Brillenbügel (17) und wenigstens einer Klappe (25,27), welche entlang einer in Längsrichtung des Brillenbügels (17) orientierten Achse verschwenkbar ist und zusammen mit dem Brillenbügel (17) ein Schutzgehäuse bildet, wobei die erste, zweite und dritte Faltmechanik (19,21,23) jeweils eine erste und zweite Endposition aufweist. Die zweite Faltmechanik (21) und die dritte Faltmechanik (23) sind derart über einen Stell mechanismus (31) miteinander verbunden, dass ein Verschwenken des Brillenbügels (17) ein Verschwenken der wenigstens einen Klappe (25,27) bewirkt.

## Beschreibung

### Gebiet der Erfindung

Die Erfindung betrifft eine Faltbrille gemäss Oberbegriff des Anspruchs 1.

### Stand der Technik

Aus der WO 2010/022900 ist eine Faltbrille mit wenigstens einer Klappe an den beiden Brillenbügeln bekannt. Die Klappen sind Teil eines Schutzgehäuses für die zusammengefaltete Brille. Die offenbarte Faltbrille umfasst eine erste, zweite und dritte Faltmechanik. Die erste Faltmechanik ist an der Verbindungsbrücke der beiden Brillengläser angeordnet, wodurch sich die beiden Brillengläser aufeinander falten lassen. Die zweite Faltmechanik stellt in bekannter Weise das Gelenk zwischen einem Brillenbügel und einem Brillenglas dar. Die dritte Faltmechanik dient dem Aus- und Einklappen der Klappen. Dank der drei Faltmechaniken lässt sich die Faltbrille sehr klein zusammenlegen. Im zusammengefalteten Zustand ist die Faltbrille durch die ausgeklappten Klappen geschützt. Insbesondere wenn an den beiden Brillenbügeln jeweils ein Paar von Klappen oben und unten angelenkt ist, sind zum Ein- und Ausfalten der Brille jedoch relativ viele Handgriffe nötig.

### Aufgabe der Erfindung

Aufgabe der vorliegenden Erfindung ist es, eine verbesserte Faltbrille vorzuschlagen, welche mit weniger Handgriffen als Faltbrillen des Stands der Technik zusammenfaltbar sind.

### Beschreibung

Erfindungsgemäss wird die Aufgabe bei einer Faltbrille gemäss Oberbegriff des Anspruchs 1 dadurch gelöst, dass die zweite Faltmechanik und die dritte Faltmechanik derart über einen Stellmechanismus miteinander verbunden sind, dass ein Verschwenken des Brillenbügels ein Verschwenken der wenigstens einen Klappe bewirkt. Ein zusätzlich manuelles Ein- und Ausklappen der Klappen zwischen den beiden Endpositionen ist bei der erfindungsgemässen Faltbrille im Gegensatz zum Stand der Technik nicht mehr notwendig. Eine Betätigung der zweiten Faltmechanik führt automatisch zum Verschwenken der Klappen in die zur zweiten Faltmechanik korrespondierende Position. Die Faltbrille ist demnach einfach und rasch mit wenigen Handgriffen zu falten und zu entfalten.

In einer besonders bevorzugten Ausführungsform ist der Stellmechanismus durch eine Steuerstange mit einem ersten und zweiten Ende realisiert, wobei das erste Ende gelenkig am äusseren Rand des Brillenglases oder einem Fortsatz am äusseren Rand des Brillenglases festgelegt ist und das zweite Ende in einer Linearbewegung entlang der Längserstreckung des Bügels geführt ist. Die Steuerstange kann auch ein anderer mechanischer Aktuator sein, sofern dieses Schub- und Zugkräfte aufnehmen kann. Die einfache Verbindung der zweiten und dritten Faltmechanik mit nur einem mechanischen Bauteil ermöglicht ein zuverlässiges Zusammenwirken von Brillenbügel und Klappen.

Zweckmässigerweise sind am zweiten Ende Führungsstifte angeordnet, welche in einer Führungsschiene des Brillenbügels bewegbar sind. In überraschend einfacher Weise erfüllen die Führungsstifte zusammen mit der Steuerstange die Aufgabe, aus der Drehbewegung der zweiten Faltmechanik eine Linearbewegung zu generieren. Denkbare Alternative wäre auch eine Zahnstange, welche ein Zahnrad antreibt.

In bevorzugter Weise erfüllen die Führungsstifte noch eine weitere Aufgabe, nämlich, dass die Enden der Führungsstifte in eine jeweils an den Klappen ausgeformte Führungskulisse eingreifen. Die lineare Stiftbewegung kann in eine Klappenbewegung umgesetzt werden. Die Führungskulisse ist beispielsweise an der Manteloberfläche eines an den Klappen ausgebildeten Hohlzylinders vorgesehen, wodurch die Stiftbewegung in eine Drehbewegung der Klappe transformierbar ist.

In einer weiteren besonders bevorzugten Ausführungsform sind die Führungskulissen derart ausgeformt, dass eine Linearbewegung der Führungsstifte die Klappen um die Achsen verschwenken. Zu diesem Zweck ist an der Manteloberfläche eine schraubenförmige Kulissenführung ausgeformt. Die Steigung der Schraubenlinie ist genau so gross, dass die ersten und zweiten Endpositionen der zweiten und dritten Faltmechanik übereinstimmen.

Bevorzugt ist es, wenn die Führungsschiene durch ein Federelement, insbesondere eine Blattfeder, abgedeckt ist, wodurch die Steuerstange in der ersten und zweiten Endposition der Führungsschiene verrastbar ist. Die Blattfeder bildet ein Teil der Führungsschiene und ist derart vorgespannt, dass sie die Führungsstifte an die Führungsschiene drückt. An der ersten und zweiten Endposition sind in der Führungsschiene Vertiefungen vorgesehen, in welche die Blattfeder die Führungsstifte drückt. Dadurch ist die Faltbrille in der eingefalteten und ausgefalteten Position verrastet und bedarf keiner weiteren Halterungen (beispielsweise Magnetverschlüsse wie im Stand der Technik vorgeschlagen). Bei eine Schub- oder Zugbelastung springen die Führungsstifte gegen die Vorspannung der Blattfeder aus den Vertiefungen und lassen sich entlang der Führungsschiene ziehen oder schieben.

Dadurch, dass der Brillenbügel ein Supportteil, an welchem die wenigstens eine Klappe angeordnet ist, und einen Ohrenbügel umfasst, lässt sich der Ohrenbügel dazu nutzen, als unteres Teil des Schutzgehäuses verwendet zu werden. Dazu kann der Ohrenbügel im zusammengefalteten Zustand der Faltbrille den offenen unteren Abstand zwischen den unteren Klappen verschliessen.

In einer weiteren bevorzugten Ausführungsform ist der Ohrenbügel an der wenigstens einen Klappe verschwenkbar angeordnet und bildet im zusammengefalteten Zustand der Faltbrille einen Teil des Schutzgehäuses. Das Gelenk, mit dem der Ohrenbügel mit der wenigstens einen Klappe, bevorzugt jedoch mit der unteren Klappe, verbunden ist, hat eine Anschlagfläche ausgebildet. Dadurch ist der Ohrenbügel in seiner ausgeklappten Position während dem Tragen der Faltbrille und in seiner eingeklappten Position als Teil des Schutzgehäuses stabil und wackelt nicht.

Vorteilhaft ist es, wenn die erste Faltmechanik durch ein Federelement vorgespannt ist, welches die Brillengläser sowohl in der ersten als auch in der zweiten Endposition vorspannt. Das Federelement hält die erste Faltmechanik in ihrer ersten und zweiten Endposition stabil und ein Überführen zwischen diesen Endpositionen ist nur durch überwinden der Vorspannungskraft des Federelements möglich. Zweckmässigerweise weist das Federelement eine im Wesentlichen Ω förmige Gestalt mit zwei Schenkeln und einer die Schenkeln verbindenden Krümmung auf. Diese Gestalt ermöglicht ein einfaches Abstützen und eine einfache Halterung des Federelements an der Brillenfassung. Denkbar wäre auch das Vorsehen von Verrastungen oder Verschlüssen (Magnetverschlüsse) in den Endpositionen der ersten Faltmechanik.

In einer weiteren besonders bevorzugten Ausführungsform besitzt die Krümmung eine bistabile Funktion, wodurch das Federelement Vorspannungen in entgegengesetzten Richtungen erzeugen kann. Dadurch hält das Federelement die erste Faltmechanik in der ersten und zweiten Endposition, ohne dass weiter Halterungen oder Verrastungen notwendig wären.

Dadurch, dass am Übergang von Schenkeln und Krümmung Aufnahmen für Haltevorrichtungen zur Halterung des Federelements an den Brillengläsern bevorzugt ausgeformt sind, ist das Federelement einfach und zuverlässig mit der Brillenfassung verbindbar, indem durch die Aufnahmen Haltebolzen der Brillenfassung hindurchführbar sind.

In noch einer Ausführungsform weist die Faltbrille eine Fassung auf, in welche im Bereich der zweiten Faltmechanik wenigsten auf einer Seite eine Kamera integriert ist. die Kamera ist immer in Blickrichtung der Augen orientiert und muss nicht gehalten werden, ist also anwendbar, ohne dass der Benutzer sie beachten, auspacken oder einstellen müsste.

In einer weiteren besonders bevorzugten Ausführungsform ist die Kamera aus- und einschwenkbar, indem sie in eine Kugel integriert ist, welche Kugel relativ zur Fassung verdrehbar ist. Im eingedrehten Zustand ist die Kamera geschlossen und nahezu unsichtbar, da die Kugeloberfläche an die Oberfläche der Brillenfassung angepasst ist. Das Verdrehen der Kugel zu Anwendung der Kamera ist durch die Kugelform besonders einfach und leichtgängig.

In einer weiteren bevorzugten Ausführungsform kann die Faltbrille ein Anzeigendisplay aufweisen. Die Faltbrille kann also auch als sogenannte "smart glasses" ausgebildet sein. Zur Anwendung als "smart glasses" dient die Faltbrille bevorzugt als Halter von elektronischen Geräten wie Kamera, Anzeigendisplay und mp3 player und nicht primär als eine Sehhilfe. Brillengläser sind bei einer solchen Anwendung der Faltbrille daher nicht unbedingt erforderlich.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine Detailansicht einer Steuermechanik der erfindungsgemässen Faltbrille in einem aufgeschnittenen Zustand (fehlende obere Klappe);
- Figur 2:: eine axonometrische Ansicht der Faltbrille in einem teilgefalteten Zustand mit entferntem Brillenbügel;
- Figur 3:: eine axonometrische Ansicht der Faltbrille in einem weiter teilgefalteten Zustand mit Brillenbügel;
- Figur4:: eine Explosionsdarstellung der erfindungsgemässen Faltbrille;
- Figur 5:: ein Federelement zur Vorspannung der Brillengläser;
- Figur 6:: eine axonometrische Darstellung des in die erste Faltmechanik integrierten Federelements;
- Figur 7:: eine Draufsicht auf die Faltbrille in einer "smart glasses" Variante,
- Figur 8a:: eine axonometrische Ansicht eines Details der Faltbrille mit einer integrierten Kamera,
- Figur 8b:: die Kamera in einer eingeklappten Position in der Brillenfassung,
- Figur 9a:: eine Draufsicht auf die freigeschnittene Kamera und
- Figur 9b:: die Kamera freigeschnitten in der eingeklappten Position in der Brillenfassung.

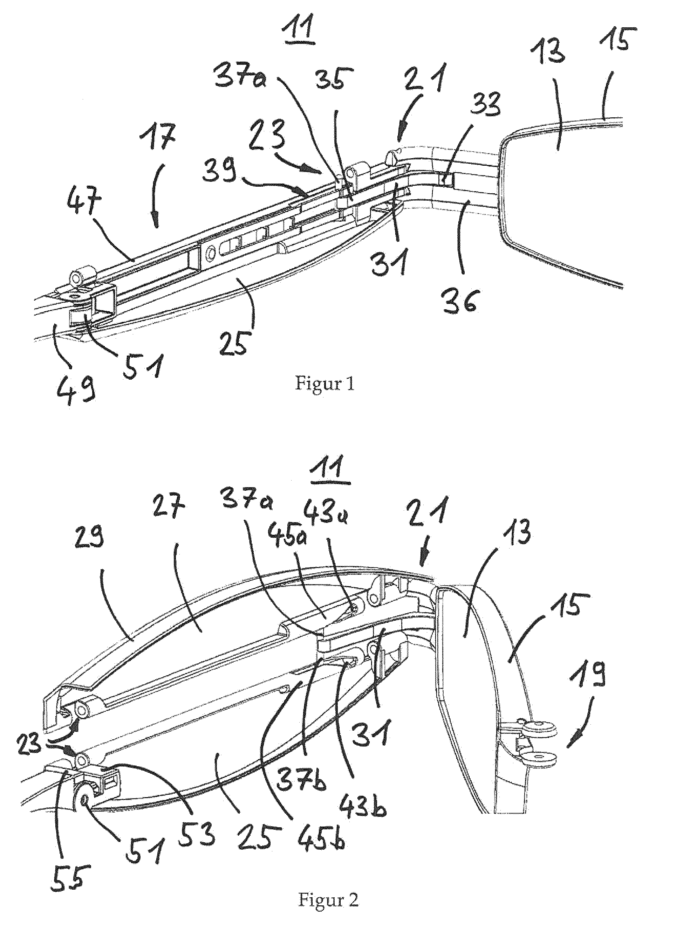

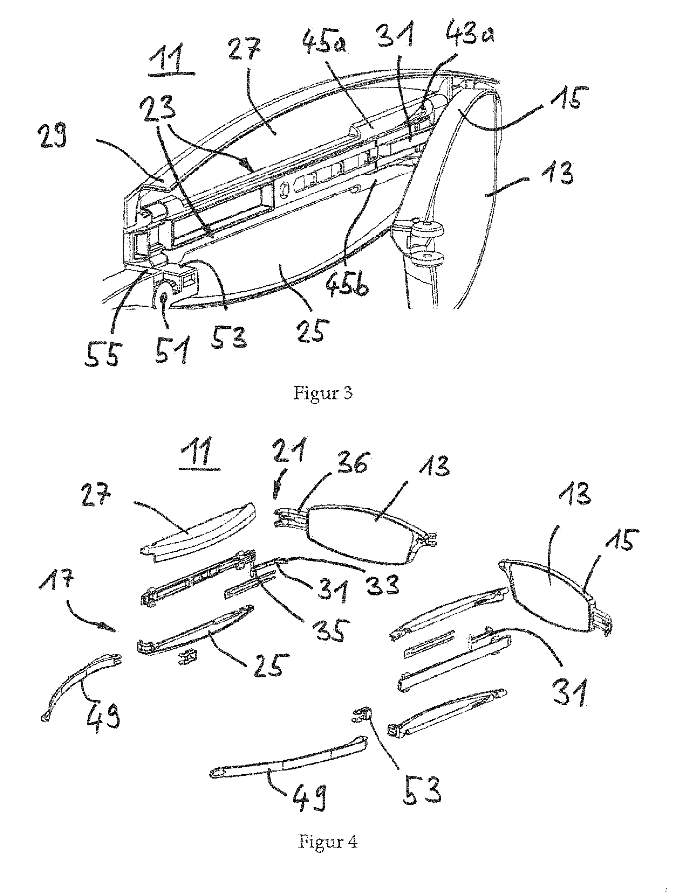

In den Figuren 1 bis 4 sind Teilansichten einer erfindungsgemässen Faltbrille gezeigt, welche gesamthaft mit dem Bezugszeichen 11 bezeichnet ist. Die Faltbrille 11 umfasst zwei Brillengläser 13, eine Brillenfassung 15 und zwei Bügel 17. Denkbar ist es auch, dass die Brillengläser in keine Fassung 15 eingefasst sind, dann handelt es sich um eine sogenannte rahmenlose Brillenfassung. Die beiden Brillengläser 15 sind durch eine erste Faltmechanik 19 mit ihren Aussenseiten aufeinander faltbar.

Eine zweite Faltmechanik 21 ist zwischen der Brillenfassung 15 und den Bügeln 17 vorgesehen. Durch die zweite Faltmechanik lassen sich bei Brillen die Bügel 17 an die Brillengläser 13 klappen.

Eine dritte Faltmechanik 23 ermöglicht es, dass sich eine untere und obere Klappe 25,27 entlang der Längsachse des Bügels 17 ein- und ausklappen lässt, sich also zwischen einer ersten und zweiten Endposition verschwenken lassen. Wie in der WO 2010/022900 ausführlich beschrieben, besitzt die obere Klappe 27 einen Winkelbereich 29, welcher in der ersten Endposition den oberen Rand des Brillenglases abzudecken vermag und in der zweiten Endposition an die Innenseite des Bügels 17 angeklappt ist. Die zweite Faltmechanik 21 und die dritte Faltmechanik 23 sind miteinander über einen Stellmechanismus 31 verbunden. Bevorzugt ist der Stellmechanismus durch eine Steuerstange 31 bzw. einen Aktuator 31 realisiert. Die Steuerstange 31 hat ein erstes Ende 33 und ein zweites Ende 35. Das erste Ende 33 ist gelenkig mit dem äusseren Rand des Brillenglases 13 oder der Fassung 15 verbunden, welcher Rand als Fortsatz 36 ausgebildet sein kann. Wird die zweite Faltmechanik 21 betätigt, indem der Bügel 17 an die Innenseite des Brillenglases 13 verschwenkt wird, so bewegt sich auch das zweite Ende 35 der Steuerstange 31. Damit die Bewegung des zweiten Endes geführt ist, hat die Steuerstange 31 am zweiten Ende 35 oben und unten einen Führungsstift 37a,37b ausgeformt bzw. angeordnet. Die Führungsstifte 37a,37b erfüllen zwei Funktionen:
Zum einen sind die Führungsstifte 37a,37b in einer Führungsschiene 39 des Bügels 17 geführt. Die Führungsschiene 39 bewirkt, dass die Führungsstifte 37a,37b in eine Linearbewegung entlang der Längserstreckung des Bügels 17 gezwungen sind. Um die Führungsstifte 37a,37b in einer ersten und zweiten Endposition, welche der Offen- und Verschlussposition der zweiten Faltmechanik 21 entspricht, verrasten zu können, ist eine Blattfeder 41 vorgesehen. Die Blattfeder 41 ist vorgespannt und drückt die Führungsstifte 37a,37b in Einkerbungen (in den Figuren nicht erkennbar), welche an den beiden Enden der Führungsschiene 39 vorgesehen sind. Die Führungsstifte halten daher die zweite Faltmechanik 21 in ihrer ersten und zweiten Endposition. Gegen den Federdruck verlassen die Führungsstifte 37a,37b die Einkerbungen in die Führungsschiene 39 hinein.

Zum anderen ermöglichen es die Führungsstifte 37a,37b, dass ihre Linearbewegung eine Verschwenkbewegung der oberen und unteren Klappe 25,27 bewirken. Um dies zu erreichen, sind die Führungsstifte 37a,37b in Führungskulissen 43a,43b der Klappen 25,27 aufgenommen. Die Führungskulissen 43a,43b bilden an der Manteloberfläche eines sich in Längsrichtung des Bügels erstreckenden Drehzylinders 45a,45b einen teilweise schraubenförmigen Kanal. Der schraubenförmige Kanal transformiert die lineare Bewegung des Führungsstiftes 37a,37b in eine Drehbewegung der Klappen 25,27. Die Klappen 25,27 müssen zum Schutz der Brillengläser 13 nicht, wie beim Stand der Technik separat manuell aus- bzw. eingeklappt werden, sondern klappen automatisch synchron mit der Bügelbewegung ein und aus.

Wie bereits aus dem Stand der Technik bekannt, umfasst der Brillenbügel 17 ein Supportteil 47 und einen Ohrenbügel 49. Der Ohrenbügel ist an der unteren Klappe 27 angelenkt und verschliesst das aus den Klappen 25,27 gebildete Schutzgehäuse an der Unterseite durch Verdrehen um das erste Gelenk 51. Das erste Gelenk 51 weist eine erste Anschlagfläche 53 auf, mit welcher es an dem Supportteil 47 anschlägt, wenn die untere Klappe eingeklappt wird. Eine zweite Anschlagfläche 55 ist an dem Ohrenbügel 49 als Anschlag ausgeformt, wenn dieser zum Tragen der Faltbrille 11 ausgeklappt ist.

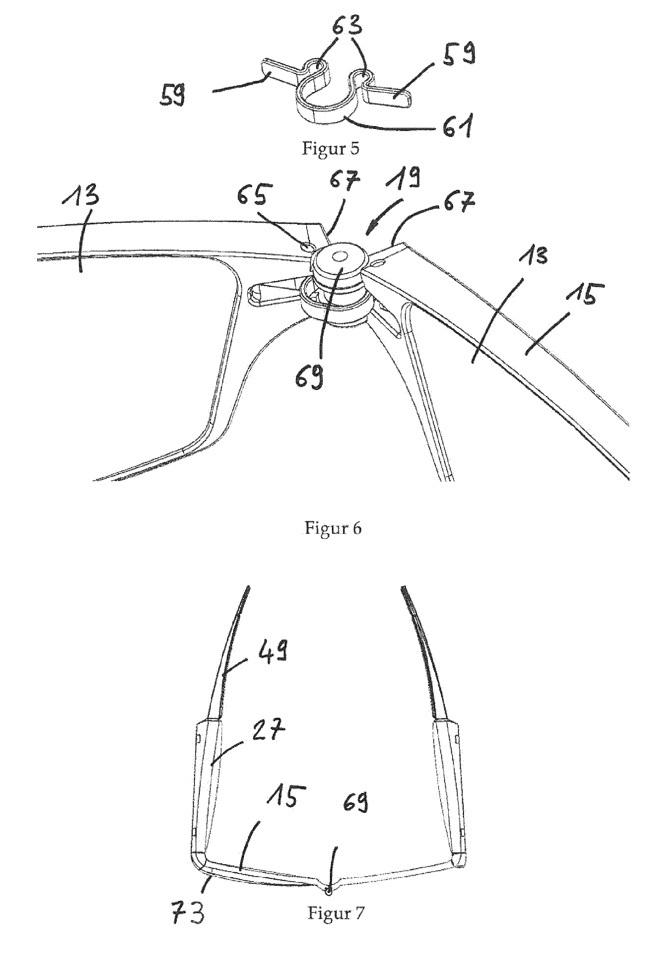

Die erste Faltmechanik 19 ist durch ein Federelement 57, bevorzugt mit Ω-förmiger Gestalt vorgespannt. Demnach umfasst das Federelement 57 zwei Schenkel 59 und eine die Schenkel verbindende Krümmung 61. Am Übergang von den Schenkeln 59 zu der Krümmung 61 sind Aufnahmen 63 vorgesehen. In die Aufnahmen 63 sind Haltevorrichtungen in Gestalt von Haltebolzen 65 aufnehmbar. Bei einer Bewegung der ersten Faltmechanik 19 stützt sich das Federelement 57 mit seinen Schenkeln 59 an der Brillenfassung ab und ist durch die Haltebolzen 59 an der Brillenfassung fixiert. In der ersten Endposition sind die Brillengläser 13 entfaltet und durch das Federelement 57 in dieser Position vorgespannt. Dadurch werden die Brillengläser 13 an dritten Anschlagflächen 67 zusammengedrückt. In Figur 6 ist eine axonometrische Frontansicht der Faltbrille 11 wiedergegeben, aus der ersichtlich ist, dass die Brillengläser 13 um ein zweites Gelenk 69 nach vorne verschwenkbar sind. Werden die Brillengläser 13 nach hinten verschwenkt, um die Faltbrille 11 zusammenzufalten, leistet das Federelement bis zu einem bestimmten Verschwenkwinkel Widerstand. Ist dieser Verschwenkwinkel überschritten, so werden die Brillengläser von dem Federelement 57 in die entgegengesetzte Richtung gedrückt. Dadurch sind die Brillengläser 13 in der gefalteten Endposition der ersten Faltmechanik vorgespannt. Das Federelement ist daher bistabil, da es Vorspannungen in zwei entgegengesetzte Richtungen erzeugen kann.

Ein weiteres Merkmal betrifft wenigstens eine in die Faltbrille integrierte Kamera 71 und ist in den Figuren 7 bis 9 veranschaulicht. Die Faltbrille 11 kann daher auch als sogenannte "smart glasses" ausgebildet sein. Unter diesem Marketing-Begriff versteht man Brillen mit elektronischen Zusatzfunktionen, wie einer Kamera, einem integrierten mp3 player, oder einem aktiven Display 72 in welchem sms-Nachrichten oder andere Funktionen (Navigation und andere Anzeigen, welche auch auf einem "smartphone" bereitgestellt werden). Solche "smart glasses" müssen auch nicht zwangsläufig Brillengläser besitzen und können auch nur als Träger für Kamera 71, Anzeigedisplay 72 usw. dienen. Die Kamera 71 hat den Vorteil, dass diese nicht gehalten werden muss, sondern dort jederzeit ein Foto gemacht werden kann, wo der Brillenbenutzer hinblickt.

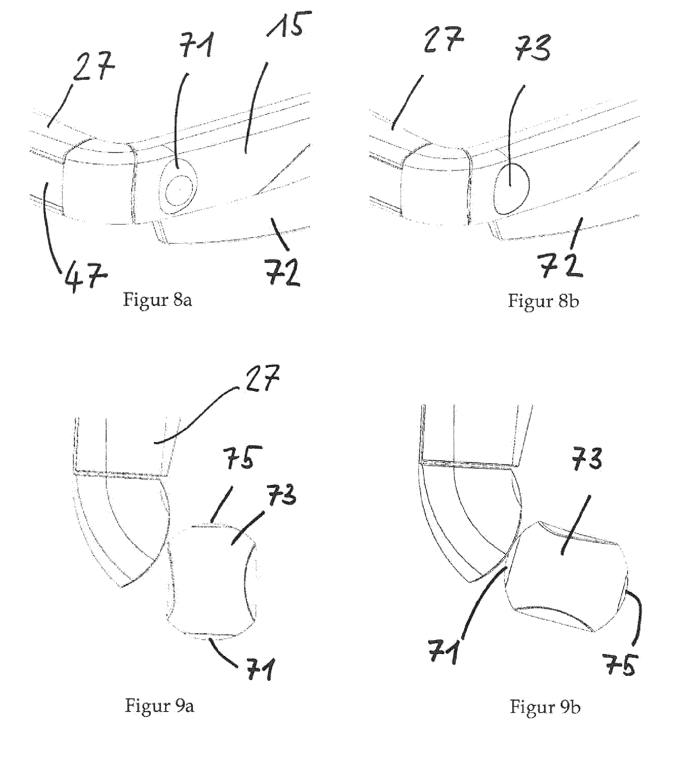

Die Kamera 71 ist im Bereich der zweiten Faltmechanik, beispielsweise im Fortsatz 36, positioniert und in eine Kugel 73 integriert. Die Kugel 73 ist in der Fassung 15 integriert und in dieser verdrehbar aufgenommen. Denkbar ist es, dass die Verschwenkung der Kugel 73 in der Fassung 15 absperrbar ist und nur von berechtigten Personen verschwenkt werden kann. In den Figuren 9a, und 9b ist die Fassung 15 aus Gründen der Übersichtlichkeit nicht gezeigt. Die Kugel ist derart geformt, dass sie an die Oberfläche der Fassung angepasst ist. Figur 8b zeigt, dass die Kugel 73 in der eingedrehten Position vollständig in die Brillenfassung 15 integriert ist. In dieser Position ist die Kamera 71 geschlossen, da sie in die Brillenfassung 15 hineingedreht ist. Ist die Kamera 71 in die Fassung verschwenkt, so bilden die Oberfläche der Kugel 73 und der Fassung 15 eine gemeinsame Oberfläche. In der Kugel kann auch noch eine zweite Kamera 75 integriert sein, welche bevorzugt gegenüber der ersten Kamera 71 in der Kugel 73 angeordnet ist. Die Kameras 71,75 können unterschiedliche Auflösungen besitzen.

### Legende:

- 11: Faltbrille
- 13: Brillengläser
- 15: Brillenfassung
- 17: Bügel
- 19: Erste Faltmechanik
- 21: Zweite Faltmechanik
- 23: Dritte Faltmechanik
- 25: Untere Klappe
- 27: Oberer Klappe
- 29: Winkelbereich
- 31: Stellmechanismus, Steuerstange, Aktuator
- 33: Erstes Ende der Steuerstange
- 35: Zweites Ende der Steuerstange
- 36: Fortsatz der Brillenfassung
- 37a,37b: Führungsstifte
- 39: Führungsschiene
- 41: Blattfeder
- 43a,43b: Führungskulissen
- 45a,45b: Drehzylinder
- 47: Supportteil
- 49: Ohrenbügel
- 51: Erstes Gelenk
- 53: Erste Anschlagfläche
- 55: Zweite Anschlagfläche
- 57: Federelement
- 59: Schenkel
- 61: Krümmung
- 63: Aufnahmen
- 65: Haltebolzen
- 67: Dritte Anschlagfläche
- 69: Zweites Gelenk
- 71: Erste Kamera
- 72: Anzeigedisplay
- 73: Kugel
- 75: Zweite Kamera

## Patentansprüche

1. Faltbrille (11) mit
- einer ersten Faltmechanik (19) zwischen zwei Brillengläsern (13),
- einer zweiten Faltmechanik (21) jeweils zwischen einem der beiden Brillengläsern (13) und einem linken und rechten Brillenbügel (17) wodurch die Faltbrille (11) M-förmig zusammenfaltbar ist und
- einer dritten Faltmechanik (23) zwischen dem Brillenbügel (17) und wenigstens einer Klappe (25,27), welche entlang einer in Längsrichtung des Brillenbügels (17) orientierten Achse verschwenkbar ist und zusammen mit dem Brillenbügel (17) ein Schutzgehäuse bildet, wobei die erste, zweite und dritte Faltmechanik (19,21,23) jeweils eine erste und zweite Endposition aufweist,
**dadurch gekennzeichnet,**
**dass** die zweite Faltmechanik (21) und die dritte Faltmechanik (23) derart über einen Stellmechanismus (31) miteinander verbunden sind, dass ein Verschwenken des Brillenbügels (17) ein Verschwenken der wenigstens einen Klappe (25,27) bewirkt.

2. Faltbrille nach Anspruch 1, **dadurch gekennzeichnet, dass** der Stellmechanismus durch eine Steuerstange (31) mit einem ersten und zweiten Ende (33,35) realisiert ist, wobei das erste Ende (33) gelenkig am äusseren Rand des Brillenglases (13) oder einem Fortsatz (36) am äusseren Rand des Brillenglases (13) festgelegt ist und das zweite Ende (35) in einer Linearbewegung entlang der Längserstreckung des Bügels (17) geführt ist.

3. Faltbrille nach Anspruch 2, **dadurch gekennzeichnet, dass** am zweiten Ende (35) Führungsstifte (37a,37b) angeordnet sind, welche in einer Führungsschiene (39) des Brillenbügels (17) bewegbar sind.

4. Faltbrille nach Anspruch 3, **dadurch gekennzeichnet, dass** die Enden der Führungsstifte (37a,37b) in eine jeweils an den Klappen(27,29) ausgeformte Führungskulisse (43a,43b) eingreifen.

5. Faltbrille nach Anspruch 4, **dadurch gekennzeichnet, dass** die Führungskulissen (43a,43b) derart ausgeformt sind, dass eine Linearbewegung der Führungsstifte (37a,37b) die Klappen (27,29) um die Achsen verschwenken.

6. Faltbrille nach einem der Ansprüche 3 bis 5, **dadurch gekennzeichnet, dass** die Führungsschiene (39) durch ein Federelement, insbesondere eine Blattfeder (41), abgedeckt ist, wodurch die Steuerstange (31) in der ersten und zweiten Endposition verrastbar ist.

7. Faltbrille nach einem der vorstehenden Ansprüche, **dadurch gekennzeichnet, dass** der Brillenbügel (17) ein Supportteil (47), an welchem die wenigstens eine Klappe (25,27) angeordnet ist, und einen Ohrenbügel (49) umfasst.

8. Faltbrille nach Anspruch 7, **dadurch gekennzeichnet, dass** der Ohrenbügel (49) an der wenigstens einen Klappe (27,29) verschwenkbar angeordnet ist und im zusammengefalteten Zustand der Faltbrille (11) einen Teil des Schutzgehäuses bildet.

9. Faltbrille nach einem der vorstehenden Ansprüche, **dadurch gekennzeichnet, dass** die erste Faltmechanik (19) durch ein Federelement (57) vorgespannt ist, welches die Brillengläser (13) sowohl in der ersten als auch in der zweiten Endposition vorspannt.

10. Faltbrille nach Anspruch 9, **dadurch gekennzeichnet, dass** das Federelement (57) eine im Wesentlichen Ω förmige Gestalt mit zwei Schenkeln (59) und einer die Schenkeln (59) verbindenden Krümmung (61) aufweist.

11. Faltbrille nach Anspruch 10, **dadurch gekennzeichnet, dass** die Krümmung (61) eine bistabile Funktion besitzt, wodurch das Federelement (57) Vorspannungen in entgegengesetzten Richtungen erzeugen kann.

12. Faltbrille nach einem der Ansprüche 10 oder 11, **dadurch gekennzeichnet, dass** am Übergang von Schenkeln (59) und Krümmung (61) Aufnahmen (63) für Haltevorrichtungen zur Halterung des Federelements (57) an den Brillengläsern (13) ausgeformt sind.

13. Faltbrille nach einem der vorstehenden Ansprüche, **dadurch gekennzeichnet, dass** die Faltbrille (11) eine Fassung (15) aufweist, in welche im Bereich der zweiten Faltmechanik (21) wenigsten auf einer Seite eine Kamera (71,75) integriert ist.

14. Faltbrille nach Anspruch 13, **dadurch gekennzeichnet, dass** die Kamera (71,75) aus- und einschwenkbar ist, indem sie in eine Kugel (73) integriert ist, welche Kugel (73) relativ zur Fassung (15) verdrehbar ist.

15. Faltbrille nach einem der vorstehenden Ansprüche, **dadurch gekennzeichnet, dass** an der Faltbrille (11) ein Anzeigedisplay (72) vorgesehen ist.
